# EUROPÄISCHE PATENTSCHRIFT

(11) **EP 1 642 674 B1**
(45) Veröffentlichungstag und Bekanntmachung des Hinweises auf die Patenterteilung: **09.04.2008**
(21) Anmeldenummer: 05108875.5
(22) Anmeldetag: 26.09.2005
(51) Int. Cl.: B23Q 11/06, B24B 55/05, B24B 55/10

(54) **Abdeckvorrichtung für ein Werkzeuggerät**
Protective hood for power tool
Capot pour outil motorisé

(30) Priorität: 29.09.2004 DE 102004047277
(43) Veröffentlichungstag der Anmeldung: 05.04.2006
(73) Patentinhaber: HILTI Aktiengesellschaft, 9494 Schaan (LI)
(72) Erfinder: Neumeier, Michael, 86989, Steingaden (DE); Spangenberg, Rolf, 82131, Gauting (DE)
(74) Vertreter: Wildi, Roland

(56) Entgegenhaltungen:
- DD-A- 52 796
- DE-U- 9 403 777
- US-A1- 2003 075 028

## Beschreibung

Die Erfindung betrifft eine Abdeckvorrichtung zum teilweisen Abdecken eines scheibenförmigen Schleif- oder Trennwerkzeuges eines Werkzeuggerätes, insbesondere eines Winkelschleifers, in einer frontseitig axialen Richtung. Die Abdeckvorrichtung weist ein Anlegeteil auf, das einen Aufnahmeraum begrenzt, der zur Aufnahme eines das Werkzeug teilweise radial abdeckenden, streifenförmigen Abschirmelement des Werkzeuggerätes dient. Dabei weist das Anlegeteil eine Innenfläche auf, die an eine Mantelfläche des Abschirmelementes anlegbar ist. Ferner weist die Abdeckvorrichtung ein Schwenkteil auf, das um eine Schwenkachse verschwenkbar am Anlegeteil gelagert ist.

Derartige zumindest zweiteilige Abdeckvorrichtungen können bedarfsweise an dem in der Regel als Schutzblech ausgebildeten Abschirmelement des Werkzeuggerätes angebracht werden, um das Werkzeug im Betrieb besser abzudecken. Durch die verbesserte Abdekkung wird einerseits ein besserer Schutz des Bedieners gegen beschleunigte, abgetragene Materialteilchen, wie insbesondere Funken, geschützt. Andererseits ermöglicht die über grosse Teile geschlossene Abdeckung eine wirkungsvolle Absaugung der Materialteilchen durch Anschluss einer Saugvorrichtung, wie beispielsweise einem Industriestaubsauger.

Aus der DE 94 03 777 ist eine Schutzeinrichtung für Winkelschleifgeräte bekannt. Diese weist eine Abschirmscheibe auf, die über ein Mantelelement kraftschlüssig an einem streifenförmigen Schutzelement des Winkelschleifgerätes anbringbar ist. An der Abschirmscheibe ist eine Abdeckung verschwenkbar angeordnet. Im Betrieb wird die Abdeckung durch Andrücken gegen ein Werkstück entgegen einer Federkraft in Richtung der Abschirmscheibe verschwenkt und gibt dabei das Werkzeug frei. Beim Entfernen des Winkelschleifgerätes von dem Werkstück wird die Abdeckung durch die Federkraft von der Abschirmscheibe weg gedrückt, wodurch der Bereich des Werkzeuges, auf den von Aussen zugegriffen werden kann, erheblich reduziert wird.

Durch diese bekannte Schutzeinrichtung kann ein guter Schutz des Bedieners gegen beschleunigte Materialteilchen sowie eine wirkungsvolle Absaugleistung bei Anschluss einer Saugvorrichtung erzielt werden.

Nachteilig an der bekannten Abdeckvorrichtung ist, dass die üblichen Mittel zum kraftschlüssigen Festlegen der Abdeckvorrichtung am Werkzeuggerät, wie beispielsweise Spannschrauben, nur umständlich zu betätigen sind. Zudem sind viele bekannte kraftschlüssige Festlegemittel nicht geeignet, um die im Betrieb an der Abdeckvorrichtung auftretenden Kräfte, wie beispielsweise tangential einwirkende Stösse, sicher aufnehmen zu können, ohne dass die Abdeckvorrichtung gegenüber dem Werkzeuggerät verrutscht.

US 2003/0075028 A1 beschreibt einen Winkelschleifer mit einer daran befestigten Schutzvorrichtung. Diese weist eine Schutzhaube auf, an der eine verschwenkbare Schutzabdeckung zur Abschirmung eines Arbeitsbereiches des Winkelschleifers gehalten ist. Die Schutzabdeckung ist dabei durch eine Verriegelungsvorrichtung in einer Abdeckposition lösbar verriegelbar, in der eine scheibenförmiges Werkzeug vollständig abgedeckt ist.

Der vorliegenden Erfindung liegt die Aufgabe zugrunde, eine Abdeckvorrichtung bereitzustellen, die die genannten Nachteile vermeidet und eine schnelle Montage- und Demontage gegenüber dem Werkzeuggerät sowie einen sicheren Halt an diesem gewährleistet.

Erfindungsgemäss wird die Aufgabe dadurch gelöst, dass das Schwenkteil gegenüber dem Anlegeteil zwischen einer Festlegestellung und einer Offenstellung verschwenkbar ist. Dabei begrenzen das Schwenkteil und das Anlegeteil in der Festlegestellung den Aufnahmeraum zu jeweils beiden tangentialen und axialen Seiten zumindest teilweise. Zudem wird der Aufnahmeraum in radialer Richtung nach Aussen zumindest teilweise begrenzt. In der Offenstellung ist der Aufnahmeraum zumindest in einer der genannten Richtungen offen, um das Abschirmelement herein- oder herausbewegen zu können. Durch den auf diese Weise verschliessbaren Aufnahmeraum kann die Abdeckvorrichtung formschlüssig mit dem Abschirmelement verbunden werden, wodurch ein sicherer Halt der Abdeckvorrichtung an dem Werkzeuggerät gewährleistet werden kann. Dabei wird aufgrund der gekrümmten Form des Aufnahmeraumes beziehungsweise des Abschirmelementes auch in radialer Richtung nach Innen ein Formschluss erzielt unabhängig davon, ob der Aufnahmeraum auch radial nach Innen zumindest teilweise umschlossen ist oder nicht. Die Verschwenkbarkeit des Schwenkteils gegenüber dem Anlegeteil ermöglicht dabei eine schnelle Montage beziehungsweise Demontage der Abdeckvorrichtung.

An einem ersten tangentialen Ende der Innenfläche ist ferner ein erstes Tangentialanlegemittel angeordnet, das mit einem ersten tangentialen Begrenzungsrand des Abschirmelementes in eine in tangentialer Richtung wirkende Anlage bringbar ist. Zudem ist an dem Schwenkteil ein zweites Tangentialanlegemittel vorgesehen, das durch Verschwenken des Schwenkteils gegenüber dem Anlegeteil an einem zweiten tangentialen Ende der Innenfläche positionierbar ist. Hierdurch kann das zweite Tangentialanlegemittel in der Festlegestellung mit einem zweiten tangentialen Begrenzungsrand des Abschirmelementes in Anlage gebracht werden, die der Anlage am ersten tangentialen Begrenzungsrand entgegen gesetzt wirkt. Hierdurch kann die Abdeckvorrichtung an der Innenfläche in beide tangentialen Richtungen und bedingt durch das Zusammenwirken der Tangentialanlegemittel mit der Innenfläche auch in radialer Richtung vollständig formschlüssig festgelegt werden.

In einer besonders bevorzugten Ausführungsform ist das Schwenkteil durch ein Sauganschlussteil gebildet, das ein Verbindungsmittel aufweist, an dem eine Saugleitung zu einem Saugstromerzeuger anschliessbar ist. Auf diese Weise kann das Schwenkteil sowohl zur Herstellung des Formschlusses mit dem Abschirmelement als auch zum Anschluss einer Saugvorrichtung genutzt werden. Hierdurch kann die Abdeckvorrichtung relativ stabil und kompakt ausgeformt werden.

Bevorzugterweise ist der Aufnahmeraum in axialer Richtung zum einen durch eine im Wesentlichen quer zur Innenfläche stehende Abschirmscheibe, durch die das Werkzeug frontseitig teilweise abdeckbar ist, und zum anderen durch mindestens eine Eingrifflasche, durch die das Abschirmelement werkzeugseitig hintergreifbar ist, begrenzt. Auf diese Weise kann bei einfachem Aufbau auch in beidseitiger axialer Richtung eine sichere formschlüssige Festlegung der Abdeckvorrichtung an dem Abschirmelement erzielt werden.

Vorteilhafterweise ist das Schwenkteil mittels einer Festlegeeinrichtung gegenüber dem Anlegeteil in der Festlegestellung festlegbar, wodurch eine sichere Beibehaltung des Formschlusses zwischen der Abdeckvorrichtung und dem Abschirmelement im Betrieb gewährleistet ist.

Dabei weist die Festlegeeinrichtung vorteilhafterweise ein Verriegelungsteil auf, das am Schwenkteil um eine zweite Schwenkachse verschenkbar gelagert ist und an dem Rastmittel ausgebildet sind, die mit Gegenrastmitteln am Anlegeteil verrastbar sind. Hierdurch kann bei geringen Herstellungskosten eine sichere Festlegung des Schwenkteils am Anlegeteil gewährleistet werden.

In einer besonders vorteilhaften Ausführungsform weist das Verriegelungsteil eine Werkzeugaustrittsöffnung auf, an der die Abdeckvorrichtung an einem zu bearbeitenden Werkstück anlegbar ist. Hierdurch kann das Verriegelungsteil gleichzeitig als Anlegeelement genutzt werden. Auf diese Weise kann das Verriegelungsteil auch bei stabiler Ausführung besonders gut in die Abdeckvorrichtung integriert werden.

Dabei ist es günstig, wenn die Rastmittel des Verriegelungsteils eine Rastnase und die Gegenrastmittel mehrere Aufnahmeausnehmungen aufweisen, wobei die Rastnase mittels eines Federarms gegen die Aufnahmeausnehmungen vorgespannt und mit jeweils einer von diesen in Eingriff bringbar ist. Hierdurch kann das Schwenkteil auf einfache Weise in verschiedenen Stellungen gegenüber dem Anlegeteil festgelegt werden, um eine gewünschte Schnitttiefe einzustellen.

Ferner ist es günstig, wenn an der Werkzeugaustrittsöffnung ein Gleitschuh, insbesondere aus Metall, vorgesehen ist. Auf diese Weise kann eine leichte und gleichmässige Gleitbewegung der Abdeckvorrichtung an dem zu bearbeitenden Werkstück gewährleistet und der Verschleiss reduziert werden.

Die Erfindung wird nachstehend anhand eines Ausführungsbeispieles näher erläutert. Es zeigen:
- Fig. 1: eine Seitenansicht eines Werkzeuggerätes mit einer geschnitten dargestellten, erfindungsgemässen Abdeckvorrichtung in Offenstellung,
- Fig. 2: eine perspektivische Explosionsdarstellung der Abdeckvorrichtung nach Fig. 1 und
- Fig. 3: eine geschnittene Darstellung der Abdeckvorrichtung in einer Festlegestellung.

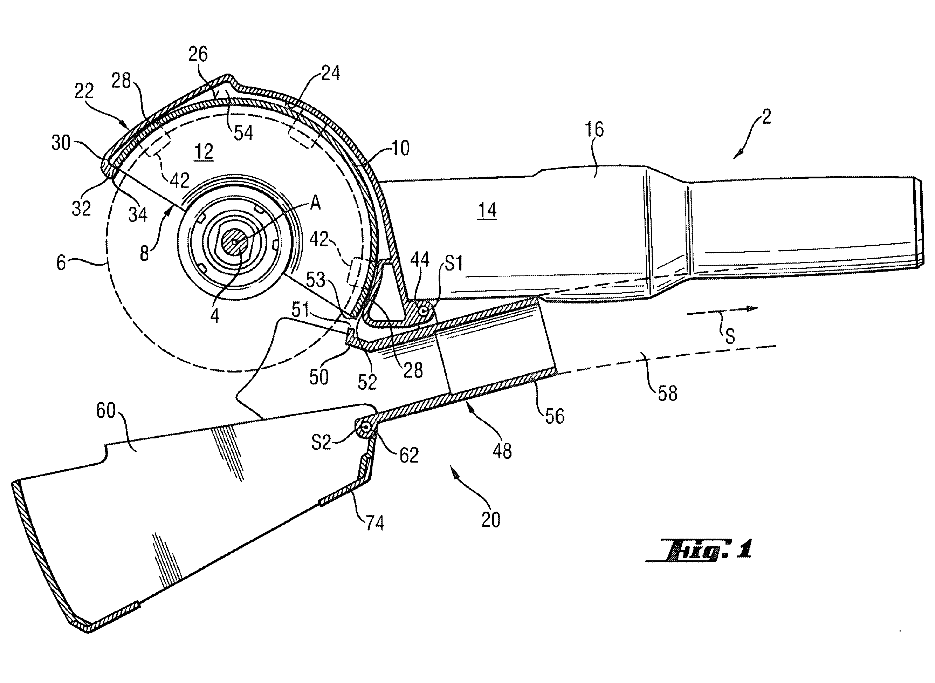

Fig. 1 zeigt ein Werkzeuggerät 2 in Form eines Winkelschleifgerätes, das eine Werkzeugspindel 4 um eine Achse A herum antreibt, an der ein scheibenförmiges Werkzeug 6 zum Schleifen und/oder Trennen festlegbar ist.

Zum Schutz einer bedienenden Person vor abgetragenen Materialteilchen, die im Betrieb des Werkzeuggerätes 2 in radialer Richtung des Werkzeuges 6 beschleunigt werden, weist das Werkzeuggerät 2 eine Abschirmeinrichtung 8 auf. Die Abschirmeinrichtung 8 formt hierzu ein streifenförmiges Abschirmelement 10 aus, das das Werkzeug 6 kreisbogenförmig in radialer Richtung teilweise umgibt. Das Abschirmelement 10 ist über einen im Wesentlichen kegelstumpfausschnittsförmigen Verbindungsbereich 12 der Abschirmeinrichtung 8 an einer Werkzeugseite 14 eines Gehäuses 16 des Werkzeuggerätes 2 befestigt. Aus dieser Werkzeugseite 14 ragt die Werkzeugspindel 4 heraus, wobei die Abschirmeinrichtung 8 die Werkzeugspindel 4 teilweise umgibt.

An der Abschirmeinrichtung 8 ist eine Abdeckvorrichtung 20 anbringbar. Diese weist hierzu ein Anlegeteil 22 auf, das eine Innenfläche 24 ausbildet, die einen im Wesentlichen kreisbogenförmigen Längsschnitt aufweist, und die bereichsweise in Form und Grösse an eine radial äussere Mantelfläche 26 des Abschirmelementes 10 angepasst ist. Auf diese Weise bildet das Abschirmelement 10 zwei Kontaktbereiche 28, die in radialer Richtung an dem Abschirmelement 10 anliegen.

Ferner weist das Anlegeteil 22 an einem ersten tangentialen Ende 30 der Innenfläche 24 ein erstes Tangentialanlegemittel 32 in Form eines nach innen ragenden Vorsprunges auf. An dieses erste Tangentialanlegemittel 32 ist, wie dargestellt, ein erster tangentialer Begrenzungsrand 34 des Abschirmelementes 10 in tangentialer Richtung anlegbar.

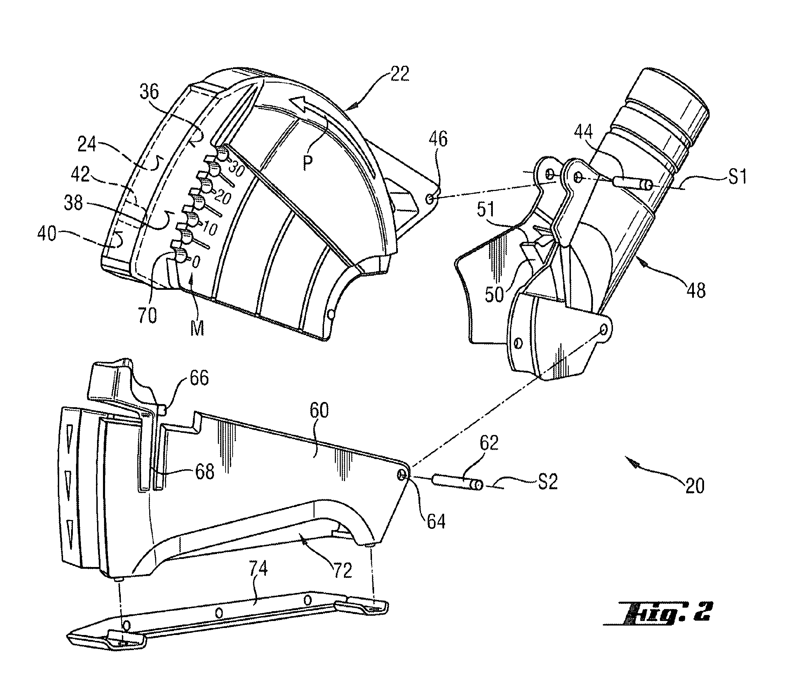

Wie aus Fig. 2 zu entnehmen ist, ist zwischen einem frontseitigen Rand 36 der Innenfläche 24 eine Abschirmscheibe 38 im Wesentlichen senkrecht zur Innenfläche 24 aufgespannt. An einem vom frontseitigen Rand 36 abgewandten rückseitigen Rand 40 sind ferner, wie insbesondere aus Fig. 1 zu entnehmen ist, drei Eingrifflaschen 42 vorgesehen, die ebenfalls im Wesentlichen senkrecht zur Innenfläche 24 stehen.

Wie ferner insbesondere aus Fig. 2 ferner zu entnehmen ist, ist an dem Anlegeteil 22 über einen ersten Lagerstift 44, der in einer ersten Stiftaufnahme 46 gehalten ist, ein Schwenkteil 48 um eine erste Schwenkachse S1 verschwenkbar am Anlegeteil 22 gelagert. Das Schwenkteil 48 weist ein zweites Tangentialanlegemittel 50 auf, das durch Verschwenken des Schwenkteils 48 gegenüber dem Anlegeteil 22 an einem zweiten tangentialen Ende 52 der Innenfläche 24 positionierbar ist beziehungsweise von diesem distanzierbar ist. Hierdurch ist das zweite Tangentialanlegemittel 50 an einen zweiten tangentialen Begrenzungsrand 53 des Abschirmelementes 10 anlegbar. Dabei ist an dem zweiten Tangentialanlegemittel 50 ein Hintergreifmittel 51 ausgeformt, das nach innen ragt.

Auf diese Weise ist durch das zweite Tangentialanlegemittel 50 ein im Wesentlichen durch das Anlegeteil 22 definierter Aufnahmeraum 54 verschliessbar, der im Wesentlichen die Form eines kreisbogenförmig gekrümmten Streifens aufweist, und dabei an Form und Grösse des Abschirmelementes 10 angepasst ist, um dieses aufnehmen zu können.

Fig. 1 zeigt die Abdeckvorrichtung in einer Offenstellung, in der das Schwenkteil 48 vom Anlegeteil 22 weg geschwenkt ist. Dabei ist der Aufnahmeraum 54 in axialer Richtung einerseits durch die Eingrifflaschen 42 und andererseits durch die Abschirmscheibe 38, in radialer Richtung nach Aussen durch die Innenfläche 24 und in einer der beiden tangentialen Richtungen durch das erste Tangentialanlegemittel 32 jeweils zumindest bereichsweise begrenzt.

In der Offenstellung kann das Anlegeteil 22 somit durch Verdrehen gegenüber der Abschirmeinrichtung 8 auf das Abschirmelement 10 aufgeschoben beziehungsweise von diesem entfernt werden.

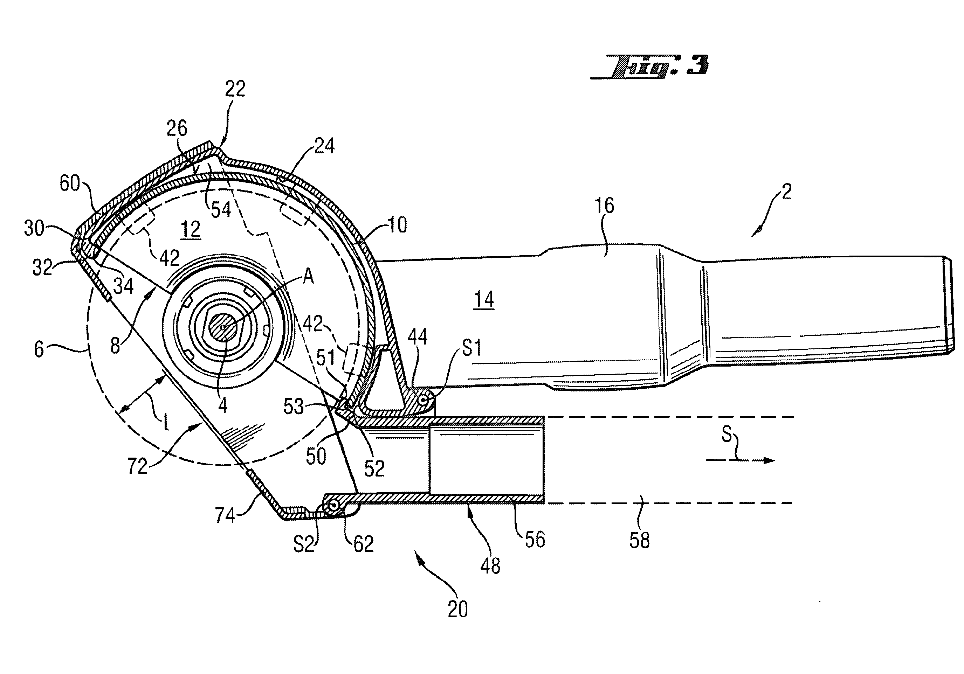

Fig. 3 zeigt die Abdeckvorrichtung 20 in einer Festlegestellung, in der das zweite Tangentialanlegemittel 50 am zweiten tangentialen Ende 52 der Innenfläche 24 positioniert ist. Hierdurch ist der Aufnahmeraum 54 nicht nur in axialer Richtung sondern auch in tangentialer Richtung beidseitig begrenzt. Auf diese Weise ist das im Aufnahmeraum 54 positionierte Abschirmelement 10 gegenüber dem Anlegeteil 22 in tangentialer und axialer Richtung sowie infolge der gekrümmten Formgebung auch in radialer Richtung beidseitig formschlüssig festgelegt.

Das Hintergreifmittel 51 hintergreift in dieser Festlegestellung das Abschirmelement 10 am zweiten tangentialen Begrenzungsrand 53. Hierbei wird eine gewisse Klemmwirkung erzielt, durch die das Schwenkteil 48 mit einer beschränkten Haltekraft am Anlegeteil 22 in der Festlegestellung gehalten wird.

An dem Schwenkteil 48 ist ein stutzenförmiges Verbindungsmittel 56 ausgeformt an dem eine Saugleitung 58 anschliessbar ist, über die die Innenseite der Abdeckvorrichtung 20 durch einen nicht dargestellten Saugstromerzeuger, wie beispielsweise einem handelsüblichen Industriestaubsauger, mit einem Saugstrom S beaufschlagbar ist.

Zur abschliessenden Sicherung des Schwenkteils 48 in der Festlegestellung ist, wie insbesondere aus Fig. 2 zu entnehmen ist, ein Verriegelungsteil 60 vorgesehen, das über einen zweiten Lagerstift 62, der in einer zweiten Stiftaufnahme 64 am Schwenkteil 48 gehalten ist, um eine zweite Schwenkachse S2 herum verschwenkbar gelagert. Das Verriegelungsteil 60 ist derart geformt, dass es in der Festlegestellung, in der das zweite Tangentialanlegemittel 50 am zweiten tangentialen Ende 52 positioniert ist, das Anlegeteil 22 ausgehend vom Schwenkteil 48 hintergreift, wie in Fig. 3 dargestellt.

An dem Verriegelungsteil 60 ist, wie aus Fig. 2 zu entnehmen ist, ein Rastmittel 66 in Form einer an einem Federarm 68 gehaltenen Rastnase vorgesehen, die mit einem von mehreren Gegenrastmitteln 70 in Eingriff bringbar ist, die durch entsprechend dem Rastmittel 66 dimensionierten Ausnehmungen an der Abschirmscheibe 38 gebildet sind.

Wie aus Fig. 2 ferner zu entnehmen ist, weist das Verriegelungsteil 60 eine Werkzeugaustrittsöffnung 72 auf, durch die das Werkzeug 6, wie in Fig. 3 angedeutet, aus der Abdeckvorrichtung 20 heraus ragen kann. Dabei ist an der Werkzeugaustrittsöffnung 72 ein Gleitschuh 74 aus Metall vorgesehen, der die Werkzeugaustrittsöffnung 72 zumindest teilweise umgibt, und über den die Abdeckvorrichtung 20 im Betrieb an ein zu bearbeitendes Werkstück anlegbar ist.

Zum Festlegen der Abdeckvorrichtung 20 an dem Abschirmelement 10 wird dieses in der Offenstellung in den Aufnahmeraum 54 hinein verlegt. Dabei wird die Innenfläche 24 an die Mantelfläche 26 angelegt. Anschliessend wird das Schwenkteil 48 in die Festlegestellung verschwenkt und dabei das zweite Tangentialanlegemittel 50 am zweiten tangentialen Ende 52 positioniert, um den Aufnahmeraum 54 zu verschliessen. Durch das Hintergreifmittel 51 wird dabei ein vorläufiges Festklemmen des Schwenkteils 48 gegenüber dem Anlegeteil 22 in der Festlegestellung erzielt. Eine abschliessende Sicherung in der Festlegestellung wird durch Verrasten des Rastmittels 66 mit einem der Gegenrastmittel 70 hergestellt.

Je nachdem, mit welchem Gegenrastmittel 70 das Rastmittel 66 dabei zusammen wirkt, wird eine Länge I festgelegt, über die das Werkzeug 6 im Betrieb aus der Abdeckvorrichtung 20 heraus ragt, wie in Fig. 3 dargestellt. Diese Länge I entspricht dabei der Schnitttiefe, die in der jeweiligen Festlegestellung im Betrieb erzielt werden kann. Diese durch das Rastmittel 66 und die Gegenrastmittel 70 einstellbaren, vorbestimmten Schnitttiefen, sind als jeweilige Masszahl M neben jedem zweiten der Gegenrastmittel 70 angegeben.

Ferner ist an dem Anlegeteil 22 ein Pfeil P ausgeformt, der die vorgesehene Drehrichtung des Werkzeuges 6 anzeigt.

## Patentansprüche

1. Abdeckvorrichtung (20) zum teilweisen Abdecken eines scheibenförmigen Schleif- oder Trennwerkzeuges (6) eines Werkzeuggerätes (2), insbesondere eines Winkelschleifers, in einer frontseitig axialen Richtung
mit einem Anlegeteil (22) das einen Aufnahmeraum (54) zur Aufnahme eines das Werkzeug (6) teilweise radial abdeckenden, streifenförmigen Abschirmelementes (10) des Werkzeuggerätes (2) begrenzt, wobei das Anlegeteil (22) eine Innenfläche (24) aufweist, die an eine Mantelfläche (26) des Abschirmelementes (10) anlegbar ist, und
einem Schwenkteil (48), das um eine Schwenkachse (S1) verschwenkbar am Anlegeteil (22) gelagert ist,
**dadurch gekennzeichnet, dass** das Schwenkteil (48) gegenüber dem Anlegeteil (22) zwischen einer Festlegestellung,
in der beide Teile den Aufnahmeraum (54) in tangentialer und axialer Richtung beidseitig sowie in radialer Richtung nach Aussen zumindest teilweise begrenzen und
einer Offenstellung verschwenkbar ist,
in der der Aufnahmeraum (54) zumindest in einer der genannten Richtungen offen ist, wobei
an einem ersten tangentialen Ende (30) der Innenfläche (24) ein erstes Tangentialanlegemittel (32) und an dem Schwenkteil (48) ein zweites Tangentialanlegemittel (50) vorgesehen ist, das an einem zweiten tangentialen Ende (52) der Innenfläche (24) positionierbar ist.

2. Abdeckvorrichtung nach Anspruch 1, **dadurch gekennzeichnet, dass** das Schwenkteil (48) durch ein Sauganschlussteil gebildet ist, das ein Verbindungsmittel (56) aufweist, an dem eine Saugleitung (58) zu einem Saugstromerzeuger anschliessbar ist.

3. Abdeckvorrichtung nach Anspruch 1 oder 2, **dadurch gekennzeichnet, dass** der Aufnahmeraum (54) in axialer Richtung zum einen durch eine im Wesentlichen quer zur Innenfläche (24) stehende Abschirmscheibe (38), durch die das Werkzeug (6) frontseitig teilweise abdeckbar ist, und zum anderen durch mindestens eine Eingrifflasche (42), durch die das Abschirmelement (10) werkzeugseitig hintergreifbar ist, begrenzt ist.

4. Abdeckvorrichtung nach einem der Ansprüche 1 bis 3, **dadurch gekennzeichnet, dass** das Schwenkteil (48) mittels einer Festlegeeinrichtung gegenüber dem Anlegeteil (22) in der Festlegestellung festlegbar ist.

5. Abdeckvorrichtung nach Anspruch 4, **dadurch gekennzeichnet, dass** die Festlegeeinrichtung ein Verriegelungsteil (60) aufweist, das am Schwenkteil (48) um eine zweite Schwenkachse (S2) verschenkbar gelagert ist und an dem Rastmittel (66) ausgebildet sind, die mit Gegenrastmitteln (70) am Anlegeteil (22) verrastbar sind.

6. Abdeckvorrichtung nach Anspruch 5, **dadurch gekennzeichnet, dass** das Verriegelungsteil (60) eine Werkzeugaustrittsöffnung (72) aufweist, an der die Abdeckvorrichtung (20) an einem zu bearbeitenden Werkstück anlegbar ist.

7. Abdeckvorrichtung nach Anspruch 5 oder 6, **dadurch gekennzeichnet, dass** die Rastmittel (66) des Verriegelungsteils (60) eine Rastnase und die Gegenrastmittel (70) mehrere Aufnahmeausnehmungen aufweisen, wobei die Rastnase mittels eines Federarms (68) gegen die Aufnahmeausnehmungen vorgespannt und mit jeweils einer von diesen in Eingriff bringbar ist.

8. Abdeckvorrichtung nach Anspruch 6 oder 7, **dadurch gekennzeichnet, dass** an der Werkzeugaustrittsöffnung (72) ein Gleitschuh (74) vorgesehen ist.

## Claims

1. Guard arrangement (20) for partly guarding a grinding or cutting wheel (6) of a power tool (2), in particular an angle grinder, axially at the front
with a rest part (22) which bounds an accommodation space (54) for a strip-form shield element (10) of the power tool (2) partly guarding the wheel (6) radially, the rest part (22) having an inner face (24) which is restable on a circumferential face (26) of the shield element (10), and
a swivel part (48) mounted pivotably about a pivot axis (S1) on the rest part (22),
**characterized in that** the swivel part (48) is pivotable with respect to the rest part (22) between a fastening position
in which both parts at least partly bound the accommodation space (54) in tangential and axial directions on both sides and also radially outwards and
an open position
in which the accommodation space (54) is open in at least one of the said directions, a first tangential end (30) of the inner face (24) being provided with a first tangential rest means (32), and the swivel part (48) being provided with a second tangential rest means (50) which can be positioned at a second tangential end (52) of the inner face (24).

2. Guard arrangement according to Claim 1, **characterized in that** the swivel part (48) is formed by a suction connection which has a connecting means (56) to which a suction line (58) leading to a suction generator can be connected.

3. Guard arrangement according to Claim 1 or Claim 2, **characterized in that** the accommodation space (54) is bounded in the axial direction on the one hand by a shield plate (38), set substantially at right angles to the inner face (24), whereby the front face of the wheel (6) can be partly guarded, and on the other hand by at least one contact lobe (42) which is able to reach behind the shield element (10) on the tool side.

4. Guard arrangement according to any one of Claims 1 to 3, **characterized in that** in the fastening position the swivel part (48) is fastenable with respect to the rest part (22) by means of a fastening device.

5. Guard arrangement according to Claim 4, **characterized in that** the fastening device has a locking part (60) which is mounted pivotably about a second pivot axis (S2) on the swivel part (48) and on which latching means (66) are formed that are engageable with catch means (70) on the rest part (22).

6. Guard arrangement according to Claim 5, **characterized in that** the locking part (60) has a wheel aperture (72) at which the guard arrangement (22) is restable on a workpiece.

7. Guard arrangement according to Claim 5 or Claim 6, **characterized in that** the latching means (66) of the locking part (60) comprise a latching neb and the catch means (70) comprise a plurality of seating recesses, the latching neb being biased towards the seating recesses, and bringable into engagement with one of the said recesses, by a spring arm (68).

8. Guard arrangement according to Claim 6 or Claim 7, **characterized in that** the wheel aperture (72) is provided with a shoe (74).

## Revendications

1. Dispositif de recouvrement (20) pour le recouvrement partiel d'un outil de meulage ou de coupe en forme de disque (6) d'un appareil (2), en particulier d'une meuleuse d'angle, dans une direction frontale axiale, comprenant une partie d'appui (22) qui limite un espace récepteur (54) destiné à recevoir un élément de protection en forme de bande (10) de l'appareil (2) recouvrant radialement une partie de l'outil (6), la partie d'appui (22) comportant une face intérieure (24) pouvant prendre appui sur une surface périphérique (26) de l'élément de protection (10), et comprenant une partie pivotante (48) montée à pivotement sur la partie d'appui (22) autour d'un axe de pivotement (S1), **caractérisé en ce que** la partie pivotante (48) peut pivoter par rapport à la partie d'appui (22) entre une position bloquée, dans laquelle les deux parties limitent au moins partiellement l'espace de réception (54) dans les directions tangentielle et axiale des deux côtés et dans la direction radiale vers l'extérieur, et une position ouverte, dans laquelle l'espace de réception (54) est ouvert au moins dans une des directions indiquées, à une première extrémité tangentielle (30) de la face intérieure (24) étant prévu un premier moyen d'appui tangentiel (32) et sur la partie pivotante (48) étant prévu un second moyen d'appui tangentiel (50) positionnable à une seconde extrémité tangentielle (52) de la face intérieure (24).

2. Dispositif de recouvrement selon la revendication 1, **caractérisé en ce que** la partie pivotante (48) est formée par un raccord d'aspiration qui comporte un moyen de liaison (56) auquel peut être reliée une conduite d'aspiration (58) menant à un générateur de courant d'aspiration.

3. Dispositif de recouvrement selon la revendication 1 ou 2, **caractérisé en ce que** l'espace de réception (54) est limité dans la direction axiale, d'une part, par un disque de protection (38) qui est sensiblement perpendiculaire à la face intérieure (24) et qui recouvre frontalement une partie de l'outil (6) et, d'autre part, par au moins une languette d'accrochage (42) qui s'engage derrière l'élément de protection (10).

4. Dispositif de recouvrement selon une des revendications 1 à 3, **caractérisé en ce que** la partie pivotante (48) peut être bloquée par rapport à la partie d'appui (22) dans la position bloquée au moyen d'un dispositif de blocage.

5. Dispositif de recouvrement selon la revendication 4, **caractérisé en ce que** le dispositif de blocage comporte une partie de verrouillage (60) qui est montée à pivotement sur la partie pivotante (48) autour d'un second axe de pivotement (S2) et sur laquelle sont prévus des moyens d'encliquetage (66) qui sont encliquetables avec des moyens d'encliquetage antagonistes (70) ménagés sur la partie d'appui (22).

6. Dispositif de recouvrement selon la revendication 5, **caractérisé en ce que** la partie de verrouillage (60) est pourvue d'une ouverture de sortie d'outil (72), au niveau de laquelle le dispositif de recouvrement (20) peut être appliqué contre une pièce à travailler.

7. Dispositif de recouvrement selon la revendication 5 ou 6, **caractérisé en ce que** les moyens d'encliquetage (66) de la partie de verrouillage (60) comportent un talon d'encliquetage, et les moyens d'encliquetage antagonistes (70) comportent plusieurs évidements récepteurs, le talon d'encliquetage étant précontraint contre les évidements récepteurs et pouvant être amené en prise avec chacun de ceux-ci au moyen d'un bras élastique (68).

8. Dispositif de recouvrement selon la revendication 6 ou 7, **caractérisé en ce qu'**au niveau de l'ouverture de sortie d'outil (72) est prévu un patin (74).
